# EUROPÄISCHE PATENTSCHRIFT

(11) **EP 3 314 297 B1**
(45) Veröffentlichungstag und Bekanntmachung des Hinweises auf die Patenterteilung: **03.06.2020**
(21) Anmeldenummer: 16730821.2
(22) Anmeldetag: 17.06.2016
(51) Int. Cl.: G01S 17/88, G01S 17/89, G01S 7/481

(54) **SENSOREINRICHTUNG ZUR OPTISCHEN ERFASSUNG VON BETÄTIGUNGSGESTEN**
SENSOR DEVICE FOR OPTICALLY SENSING ACTUATION GESTURES
DISPOSITIF DE DÉTECTION POUR LA DÉTECTION OPTIQUE DE GESTES D'ACTIONNEMENT

(30) Priorität: 15.09.2015 DE 102015115558
(43) Veröffentlichungstag der Anmeldung: 02.05.2018
(73) Patentinhaber: Huf Hülsbeck & Fürst GmbH & Co. KG, 42551 Velbert (DE)
(72) Erfinder: ZIEGLER, Alexander, 42489 Wülfrath (DE); STICHERLING, Nadine, 45257 Essen (DE)
(74) Vertreter: Zenz Patentanwälte Partnerschaft mbB
(86) Internationale Anmeldenummer: PCT/EP2016/064026
(87) Internationale Veröffentlichungsnummer: WO 2017/045787

(56) Entgegenhaltungen:
- WO-A1-2015/041517
- US-A1- 2003 218 737
- US-A1- 2013 135 604
- US-A1- 2014 350 836

## Beschreibung

Die Erfindung betrifft eine Sensoreinrichtung zur optischen Erfassung von Objekten und deren räumlichen Bewegungen. Insbesondere betrifft die Erfindung eine Sensoreinrichtung zur optischen Erfassung von Bewegungsgesten, die von Personen ausgeführt werden, um einen Bedienungswunsch zu signalisieren.

Aus dem Stand der Technik sind optische Verfahren bekannt, die Betätigungen in Reaktion auf eine Auswertung von Bildinformationen erkennen und daraufhin z.B. Schaltvorgänge auslösen. Beispielsweise sind hier automatische Videoauswertungen von Überwachungssystemen zu nennen, welche Muster oder Bewegungen aus einzelnen Bildern oder einer Folge von Bilder herauslesen. Außerdem sind zahlreiche andere optisch gestützte Systeme bekannt, wobei zu den grundlegendsten Lichtschranken oder Helligkeitssensoren gehören. Optische Systeme mit höherer Komplexität bedienen sich oft eines Arrays von optisch sensitiven Erfassungseinheiten, meist als Pixel bezeichnet, die parallel optische Informationen aufnehmen, beispielsweise in Gestalt eines CCD-Arrays.

Die DE 10 2008 025 669 A1 offenbart einen optischen Sensor, welcher eine Geste detektiert, woraufhin ein Schließelement eines Fahrzeugs automatisch bewegt wird.

Die WO 2008/116699 A2 betrifft einen optischen Sensorchip und bezieht sich auf eine optische Einklemmschutzvorrichtung für die Überwachung einer Fensterscheibe, Schiebetür oder einer Heckklappe in einem Kraftfahrzeug.

Die WO 2012/084222 A1 offenbart einen optischen Sensor zur Betätigung und Überwachung eines Schließelements.

Im Bereich der optischen Erfassung sind Systeme bekannt, welche eine pixelbezogene Ortsinformation, insbesondere eine Distanz von der Sensor- oder Erfassungseinrichtung, erfassen.

Die US 2014/0350836 A1 offenbart eine LADAR-Sensoranordnung zur Erstellung von 3D-Abbildungen, beispielsweise zur Objekterkennung.

Die WO 2013/001084 A1 offenbart ein System zur berührungslosen Erfassung von Gegenständen und Bedienungsgesten mit einer optisch gestützten Einrichtung ähnlicher Art, wie sie auch für die Erfindung einsetzbar ist.

Diese Systeme werden beispielsweise, je nach angewandtem Auswertungsverfahren, als "time of flight"-Systeme oder auch als "3D-Imager" oder "Range Imager" bezeichnet. Die Anwendungsgebiete solcher Systeme liegen im Bereich der industriellen Automatisierungstechnik, in der Sicherheitstechnik und im Automobilbereich. In einem Auto werden 3D-Sensoren in Spurhaltesystemen, zum Fußgängerschutz oder als Einparkhilfe eingesetzt. Sowohl Konzepte der Triangulation als auch der Interferometrie und auch der Lichtlaufzeitmessung (Time-offlight (TOF)) können mit optischen Sensoren umgesetzt werden. In diesem Zusammenhang wird auf diesbezügliche Ausarbeitungen verwiesen, welche die technischen Konzepte und deren Realisierung detailliert beschreiben, insbesondere die Dissertation "Photodetektoren und Auslesekonzepte für 3D-Timeof-Flight-Bildsensoren in 0,35 pm-Standard-CMOS-Technologie", Andreas Spickermann, Fakultät für Ingenieurwissenschaften der, Universität Duisburg-Essen, 2010.

Außerdem wird auf die Publikation "Optimized Distance Measurement with 3D-CMOS Image Sensor and Real-Time Processing of the 3D Data for Applications in Automotive and Safety Engineering", Bernhard König, Fakultät für Ingenieurwissenschaften der Universität Duisburg-Essen, 2008, verwiesen.

Die vorgenannten Arbeiten beschreiben das Konzept und die Realisierung von einsetzbaren optischen Sensorsystemen, so dass im Rahmen dieser Anmeldung auf deren Offenbarung verwiesen wird und nur zum Verständnis der Anmeldung relevante Aspekte erläutert werden.

Die Erfindung betrifft eine Sensoreinrichtung welche das time of flight(TOF)-Verfahren nutzt, so dass dieses hier kurz erläutert wird.

Beim TOF-Verfahren wird ein Raumbereich mit einer Lichtquelle beleuchtet und die Laufzeit des von einem Objekt im Raumbereich reflektierten Lichtes mit einem Flächensensor aufgenommen. Dazu sollten Lichtquelle und Sensor möglichst nah zueinander angeordnet sein. Aus dem linearen Zusammenhang von Lichtlaufzeit und Lichtgeschwindigkeit lässt sich die Distanz zwischen Sensor und Messobjekt bestimmen. Zur Messung der zeitlichen Verzögerung muss eine Synchronisation zwischen Lichtquelle und Sensor gegeben sein. Durch die Nutzung gepulster Lichtquellen können die Verfahren optimiert werden, denn kurze Lichtpulse (im ns-Bereich) ermöglichen eine effiziente Hintergrundlichtunterdrückung. Außerdem werden durch die Verwendung des gepulsten Lichts mögliche Mehrdeutigkeiten bei der Bestimmung der Distanz vermieden, so lange der Abstand genügend groß ist.

Einerseits wird bei diesem Konzept die Lichtquelle gepulst betrieben. Außerdem wird die Detektionseinheit, also das Pixelarray, gepulst sensitiv geschaltet, also das Integrationsfenster der einzelnen Pixel wird zeitlich mit der Lichtquelle synchronisiert und in der Integrationsdauer begrenzt. Durch den Vergleich von Ergebnissen mit unterschiedlichen Integrationsdauern können insbesondere Effekte von Hintergrundlicht herausgerechnet werden.

Wesentlich ist, dass diese Erfassungsmethode keine rein bildbasierte Erfassungsmethode ist. Es wir bei jedem Pixel eine Abstandsinformation ermittelt, was durch die zeitliche Lichtdetektion erfolgt. Bei Verwendung eines Pixelarrays liegt schließlich eine Matrix von Abstandswerten vor, welche bei zyklischer Erfassung eine Interpretation und Verfolgung von Objektbewegungen zulässt.

Die Sensoreinrichtung weist also eine 3D-Kamera in Gestalt einer time of flight Kamera auf. Dazu verfügt die 3D-Kamera über eine Pulslichtquelle und einen lichtsensitiven Erfassungschip.

Bei bekannten Kamerasystemen ist der Pulslichtquelle eine Sendeoptik und dem lichtsensitiven Erfassungschip eine Empfangsoptik zugeordnet. Die Anforderungen an Fertigungstoleranzen und Justage sind ausgesprochen anspruchsvoll, insbesondere die Ausrichtung der Sende- und Empfangsoptiken zueinander und zu den ihnen zugeordneten Bauteilen ist schwierig. Gleichwohl müssen derartige Sensoren in hoher Stückzahl und geringen Kosten gefertigt werden, wenn sie in Kraftfahrzeugen eingesetzt werden sollen.

Aufgabe der Erfindung ist es, eine einfach justierbare und kostengünstig herstellbare Sensoreinrichtung zur Anordnung an einem Kraftfahrzeug bereitzustellen.

Die Aufgabe wird gelöst durch eine Sensoreinrichtung nach Anspruch 1. Die erfindungsgemäße Sensoreinrichtung zur optischen Erfassung von Objekten und deren räumlichen Bewegungen umfasst eine 3D-Kamera, die räumliche Daten mit einem Laufzeitverfahren erfasst, wobei die 3D-Kamera eine Platine, eine Pulslichtquelle, eine Treiberschaltung, eine Steuerschaltung sowie einen lichtsensitiven Erfassungschip mit einer lichtsensitiven Fläche umfasst, wobei die Pulslichtquelle und der lichtsensitive Erfassungschip zu einem Erfassungsbereich der 3D-Kamera zusammengefasst sind.

Die Sensoreinrichtung umfasst ferner eine der sensitiven Fläche des lichtsensitiven Erfassungschips zugeordnete Empfangsoptik, eine der Pulslichtquelle zugeordnete Sendeoptik und ein Halteelement mit einer der Platine zugewandten, den Erfassungsbereich abdeckenden Platinen-Oberfläche und einer gegenüberliegenden Optik-Oberfläche. Das erfindungsgemäße Halteelement umfasst eine Sende-Durchgangsöffnung und eine Empfangs-Durchgangsöffnung, wobei die Sende-Durchgangsöffnung eine Sendeoptik-Aufnahme und die Empfangs-Durchgangsöffnung eine Empfangsoptik-Aufnahme aufweist.

Im Rahmen dieser Anmeldung ist mit "Durchgangsöffnung" eine das Haltelement vollständig durchdringende Öffnung gemeint, die aber nicht beispielsweise als kreisförmige Bohrung durch das Halteelement ausgeführt sein kann. Unter "Durchgangsöffnung" soll beispielsweise auch eine an einer Stirnseite des Halteelements angeordnete halbkreisförmige (oder eckige) Ausnehmung verstanden werden, die einen Durchtritt von Strahlen von der einen zur anderen Oberfläche erlaubt. Generell kann eine Durchgangsöffnung von beliebiger Form sein, so lange der Lichtdurchtritt gewährleistet ist. Die Aufnahmen für die Sendeund die Empfangsoptik können beliebig gestaltet sein, so lange diese es erlauben, die Optiken präzise und sicher festzulegen. Beispielsweise kann eine solche Aufnahme als eine Ringnut um die Durchgangsöffnung ausgebildet sein, in welcher die Optik befestigt wird. Im einfachsten Fall kann die Aufnahme einfach ein Abschnitt einer beispielsweise kreiszylinderförmigen Durchgangsöffnung sein, in welchem eine Optik festgelegt wird. Die Sende- und/oder Empfangsoptik kann jeweils einstückig oder mehrteilig ausgeführt sein, wobei die Aufnahme im letzteren Fall ggf. zwei Teilabschnitte aufweist.

Erfindungsgemäß umfasst das Halteelement zumindest ein Befestigungsmittel, mit welchem das Halteelement drehfest an der Platine festgelegt und ausgerichtet ist, und zwar derart, dass ein vorgegebener Abstand d zwischen der Platinen-Oberfläche des Halteelements und der Platine eingehalten ist und die Empfangs-Durchgangsöffnung an der sensitiven Fläche des lichtsensitiven Erfassungschips ausgerichtet ist.

Erfindungsgemäß wird also so vorgegangen, dass eine gewisse Vorjustage von einigen Bauteilen (den Optiken) stattfindet, bevor diese an der sensitiven Fläche des Empfangschips und der Pulslichtquelle ausgerichtet werden. Das zur Vorjustage verwendete Halteelement kann einfach mit hoher Präzision gefertigt werden, und durch die Anordnung der Optiken in bzw. an dem Haltelement lassen sich diese einfach und präzise zueinander ausrichteten. Die Befestigung über zumindest ein Befestigungsmittel ermöglicht er ferner, den Abstand zwischen Halteelement und Platine sehr fein und präzise einzustellen. Ferner erlaubt das Befestigungsmittel es, dass gleichzeitig beide Optiken an den jeweils zugeordneten Bauteilen ausgerichtet werden. Eine aufwändige und zeitintensive Befestigung der Optiken an den zugeordneten Bauteilen und ggf. die Ausrichtung der Optiken zu- bzw. aneinander entfällt, da die Montage als solche die Ausrichtung übernimmt. Die Erfindung ermöglicht daher eine einfach zu justierende und kostengünstige Sensoreinrichtung.

Als Pulslichtquelle kann zum Beispiel eine Laserdiode oder eine LED verwendet werden. Beide können direkt auf der Platine angeordnet werden. Aufgrund der Bauform ragt die Pulslichtquelle relativ weit über die Platinenoberfläche hinaus, umfasst also einen oberen Teil, der nicht gehalten ist. Die Ausrichtung der Pulslichtquelle, insbesondere des oberen Abschnitts, ist also recht schwierig und extrem empfindlich gegen Berührungen oder Vibrationen. Um den oberen Abschnitt der Pulslichtquelle zu fixieren ist es bei einer bevorzugten Ausführungsform vorgesehen, dass die Sende-Durchgangsöffnung bei der Platinen-Oberfläche einen von der Platinenoberfläche auskragenden Aufnahmebereich für die Pulslichtquelle aufweist.

Die Pulslichtquelle erzeugt in Abhängigkeit von ihrer Leistung eine gewisse Wärmemenge. Damit diese nicht der Platine zugeführt wird ist es bei einer bevorzugten Ausführungsform vorgesehen, dass die Pulslichtquelle in dem Aufnahmebereich bei der Platinen-Oberfläche der Sende-Durchgangsöffnung angeordnet ist, wobei der Aufnahmebereich vorzugsweise aus einem gut wärmeleitfähigen Material besteht oder dieses zumindest aufweist, so dass die Wärme, die von der Pulslichtquelle erzeugt wird, rasch abgeführt werden kann.

Um eine präzise Ausrichtung der Optiken an den entsprechenden Bauteilen zu erreichen ist es notwendig, dass das die Optiken aufweisende Halteelement exakt in Bezug zur Platine positioniert wird. Dies kann erreicht werden, indem das oder die Befestigungsmittel bei vorgegebener / vorgegebenen Position(en) befestigt (beispielsweise verklebt) wird bzw. werden. Zur einfachen und präzisen Positionierung ist erfindungsgemäß vorgesehen, dass die Platine zumindest eine Öffnung aufweist, in welcher das Befestigungsmittel dreh- und höhenfest festlegbar ist.

Bevorzugte Ausführungsformen der Sensoreinrichtung werden anhand einer beiliegenden Zeichnung näher erläutert, in welcher
Figur 1 schematisch die Anordnung einer Ausführungsform an einem Fahrzeug zeigt, und
Figur 2 ein Blockschaltbild einer ersten bevorzugten Ausführungsform zeigt,
Figur 3 eine schematische Seitenansicht der ersten Ausführungsform zeigt,
Figur 4 eine schematische Seitenansicht einer zweiten Ausführungsform zeigt, und
Figur 5 eine schematische Seitenansicht einer dritten Ausführungsform zeigt.

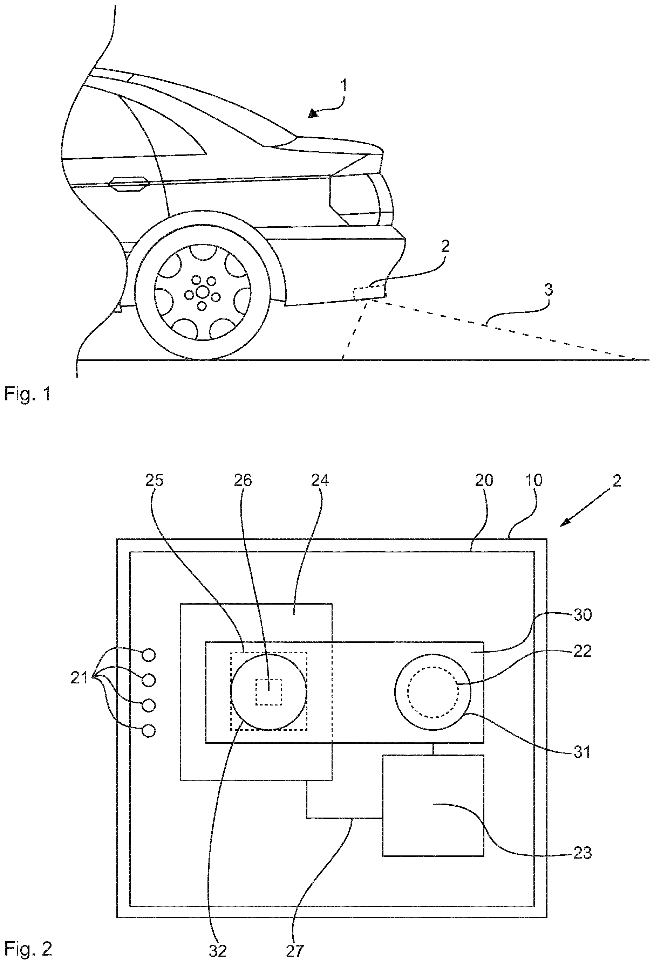

In Figur 1 ist das Heck eines Fahrzeuges 1 gezeigt. Eine Sensoreinrichtung 2 ist im heckseitigen Stoßfänger des Fahrzeuges angeordnet. Der Detektionsbereich 3 einer 3D-Kamera in der Sensoreinrichtung ist nach unten, hinten vom Fahrzeug weg gerichtet. Diese 3D-Kamera ist dazu vorgesehen, eine Bedienungsgeste für die Betätigung einer Heckklappe zu erfassen. Dazu kann ein Benutzer in dem Bereich 3 eine Geste mit seinem Fuß ausführen, die als Bedienungsgeste erkannt wird und ein Öffnen oder Schließen der Heckklappe des Fahrzeuges 1 auslöst.

Figur 2 zeigt die Sensoreinrichtung 2 in einem schematischen Blockschaltbild. Ein einheitliches Gehäuse 10 ist als Schutz ausgebildet und nimmt eine Platine 20 auf. Die Platine 20 weist Anschlüsse 21 auf, die mit einem Steckverbinder zur Kopplung der Sensoreinrichtung 2 mit einem Kabelbaum am Fahrzeug ausgebildet ist. Über den Kabelbaum wird beispielsweise einer zentralen (nicht dargestellten) Steuereinrichtung in dem Kraftfahrzeug mitgeteilt, dass eine Bedienungsgeste erkannt wurde. Entsprechend der erkannten Bedienungsgeste wird die Heckklappe geöffnet oder geschlossen.

Auf der Platine 20 ist eine Pulslichtquelle 22 ausgebildet, bei der dargestellten Ausführungsform eine Laserdiode im nahen Infrarotbereich. Bei einer alternativen Ausführungsform kann zum Beispiel auch eine LED als Pulslichtquelle verwendet werden.

Die Pulslichtquelle 22 ist mit einer Treiberschaltung 23 gekoppelt, welche die Laserdiode zur Aussendung von kurzen Pulsen im Nanosekundenbereich ansteuert. Die Treiberschaltung 23 wiederum ist über eine Leitung 27 mit einer Steuerschaltung 24 gekoppelt, die auch den lichtsensitiven Erfassungschip 25 ansteuert. Der Erfassungschip 25 weist in dieser Ausführungsform eine sensitive Fläche 26 auf, die als ein Pixelarray von 30x30 Pixeln ausgebildet. Ein solches Pixelarray ist für Erfassungen von Bewegungsgesten ausreichend, es können jedoch auch Arrays mit abweichender Auflösung eingesetzt werden.

Bei der gezeigten Ausführungsform sind die Treiberschaltung 23 und die Steuerschaltung 24 getrennt voneinander dargestellt, bei einer alternativen Ausführungsform können diese beiden Schaltungen auch als eine Einheit vorliegen, die dann beide Funktionen ausführen kann. Auch die Anordnung des Erfassungschips 25 auf bzw. innerhalb der Grenzen der Steuerschaltung 24 ist lediglich exemplarisch, andere Anordnungen sind im Rahmen der Erfindung ohne weiteres denkbar.

Die Komponenten Platine 20, Pulslichtquelle 22, Treiberschaltung 23, Steuerschaltung 24 sowie lichtsensitiver Erfassungschip 25 bilden eine 3D-Kamera, die nach dem Laufzeitprinzip arbeitet.

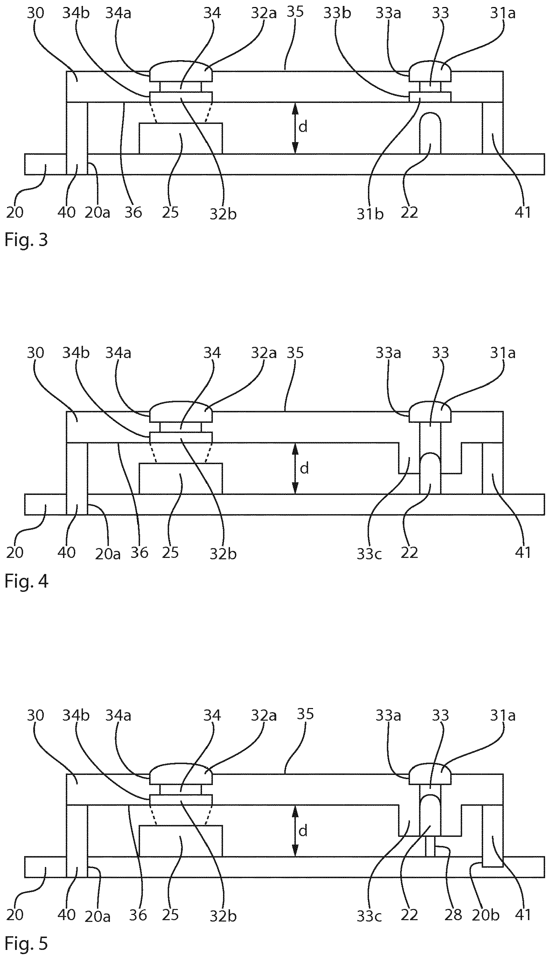

Über der Pulslichtquelle 22 und dem lichtsensitiven Erfassungschip 25 ist ein Halterelement 30 angeordnet (zur räumlichen Anordnung siehe auch Figuren 3 - 5). In Durchgangsöffnungen (siehe Figuren 3 - 5) sind eine Sendeoptik 31 und eine Empfangsoptik 32 angeordnet, wobei die Sendeoptik 31 der Pulslichtquelle 22 und die Empfangsoptik 32 dem lichtsensitiven Erfassungschip 25 bzw. der sensitiven Fläche 26 zugeordnet sind. Das Halteelement, und die notwendigen Durchgangsöffnungen, lassen sich einfach und sehr präzise herstellen, die Anordnungen der oben genannten Optiken in den Durchgangsöffnungen ist mit hoher Präzision durchführbar, so dass die Verwendung des Halteelements die Justierung der Optiken zueinander stark vereinfacht.

Das Halteelement ist mit zumindest einem (in Figur 2 nicht erkennbaren) Befestigungsmittel (siehe Figuren 3 - 5) drehfest an der Platine 20 festgelegt und ausgerichtet, wobei das Befestigungsmittel derart gewählt ist, dass ein vorgegebener Abstand d zwischen der Platine 20 und der Platinen-Oberfläche des Haltelements 30 eingehalten ist. Über das Befestigungsmittel wird ferner die Empfangs-Durchgangsöffnung an der sensitiven Fläche 26 des lichtsensitiven Empfangschips 25 ausgerichtet. Durch eine geeignete Wahl und Ausgestaltung des Befestigungsmittels und entsprechender Befestigungsbereiche an der Platine ist auch die Justierung des Halteelements zu dem lichtsensitiven Empfangschip einfach und mit hoher Präzision durchführbar.

Im nachfolgenden werden drei Ausführungsformen der Sensoreinrichtung beschrieben, wobei sich die drei Ausführungsformen dadurch unterscheiden, dass unterschiedliche Halteelement 30 verbaut sind. Zur Vermeidung von Wiederholungen sind Bauteile, die in allen drei Ausführungsformen identisch oder sehr ähnlich vorhanden sind, ausführlich lediglich in Bezug auf die erste Ausführungsform beschrieben.

Figur 3 zeigt eine schematische Seitenansicht der ersten Ausführungsform, wobei das in Figur 2 angedeutete Gehäuse 10 fortgelassen ist. Auf der Platine 20 sind der lichtsensitive Empfangschip 25 und die Pulslichtquelle 22 nebeneinander angeordnet, wobei beide Bauteile direkt auf der Platine angeordnet sind. Über der Platine 20 ist das Halteelement 30 angeordnet, welches über zwei Befestigungsmittel 40, 41 drehfest und mit konstantem Abstand d an der Platine 20 festgelegt ist. Der Abstand d lässt sich durch Wahl geeigneter Befestigungsmittel 40, 41 einfach und rasch an die speziellen baulichen Gegebenheiten der Sensoreinrichtung anpassen. Die drehfeste Festlegung kann zum Beispiel derart erfolgen, dass die Platine 20 eine (von oben betrachtet) nicht-kreisförmige Ausnehmung 20a aufweist, in welche das Befestigungsmittel 40 eingeführt ist, wobei das Befestigungsmittel in diesem Bereich komplementär zur der Ausnehmung 20a ausgebildet ist. Über die Ausnehmung 20a kann das Halteelement 30 selber sehr präzise in Bezug auf den lichtsensitiven Empfangschip 25 und die Pulslichtquelle 22 ausgerichtet werden, wobei bei präziser Ausführung der Ausnehmung 20a weitergehende Justageschritte nicht erforderlich sind.

Das Halteelement selber weist zwei Durchgangsöffnungen 33, 34 auf, wobei eine, die Sende-Durchgangsöffnung 33 der Pulslichtquelle 22, und eine, die Empfangs-Durchgangsöffnung 34, dem lichtsensitiven Empfangschip zugeordnet sind. Durch die Sende-Durchgangsöffnung tritt von der Pulslichtquelle 22 ausgestrahltes Licht, durch die Empfangs-Durchgangsöffnung tritt reflektiertes Licht wieder ein und gelangt zu dem Empfangschip. Um das von der Pulslichtquelle ausgestrahlte Licht optimal leiten zu können weist die Sende-Durchgangsöffnung bei der gezeigten Ausführungsform zwei Sendeoptik-Aufnahmen 33a, 33b auf, wobei in diesen Aufnahmen die (in diesem Fall zweiteilige) Sendeoptik 31a, 31b angeordnet ist. Entsprechend weist die Empfangs-Durchgangsöffnung 34 zwei Empfangsoptik-Aufnahmen 34a, 34b auf, in welchen die (zweiteilige) Empfangsoptik 32a, 32b angeordnet ist. Bei der gezeigten Ausführungsform sind die Aufnahmen der Durchgangsöffnungen bei den beiden Oberflächen des Halteelements ausgeführt, der Platinen-Oberfläche 36 und der Optik-Oberfläche 35.

Bei dieser Ausführungsform sind pro Durchgangsöffnung zwei Aufnahmen für eine zweiteilige Optik vorgesehen, und zwar in Form eines Ringraums im oberflächennahen Bereich des Halteelements. Bei alternativen Ausführungsformen können die Optiken (jeweils) einteilig ausgeführt sein. Auch ist eine andere Ausführung der Aufnahmen denkbar; im Rahmen der Erfindung ist es auch denkbar, dass die Optiken einfach auf dem Halteelement befestigt werden (beispielsweise verschraubt), wobei die die Optiken tragenden Bereiche des Halteelements dann die "Aufnahmen" darstellen.

Figur 4 zeigt eine schematische Seitenansicht einer zweiten Ausführungsform, bei welcher der Bereich des Halteelements 30, der der Pulslichtquelle 22 zugeordnet ist, geringfügig anders gestaltet ist als dies bei der ersten Ausführungsform der Fall ist. Wie bei Figur 4 zu erkennen, ragt die Pulslichtquelle 22 von der Platine 20 nach oben, hin zu der Platinen-Oberfläche 36 des Halteelements 30. Bei dieser Ausführungsform umfasst das Halteelement 30 einen Aufnahmebereich 33c, der sich von der Platinen-Oberfläche 36 ringförmig hin zu der Platine 20 erstreckt und so die Sende-Durchgangsöffnung 33 hin zu der Platine "verlängert". Der Aufnahmebereich 33c erstreckt sich so weit hin zu der Platine 20, dass sich ein oberer Abschnitt der Pulslichtquelle in diesen Aufnahmebereich 33c erstreckt und von diesem justiert und gehalten ist. Die Justierung der Pulslichtquelle kann gewisse Ungenauigkeiten bei der Montage der Pulslichtquelle auf der Platine 20 kompensieren, da eine Ausrichtung des oberen Abschnitts der Pulslichtquelle stattfindet. Bei dieser Ausführungsform ist die Sendeoptik nicht mehr zweiteilig ausgeführt, sondern einteilig, und in der Sendeoptik-Aufnahme 33a bei der Optik-Oberfläche 35 des Halteelements angeordnet.

Figur 5 zeigt eine schematische Seitenansicht einer dritten Ausführungsform, wobei bei dieser Ausführungsform die Anordnung der Pulslichtquelle 22 geringförmig anders ausgeführt ist. Bei den vorherigen Ausführungsformen war die Pulslichtquelle 22 mehr oder weniger direkt auf der Platine angeordnet und befestigt. Bei der dritten Ausführungsform ist die Pulslichtquelle 22 in dem Aufnahmebereich 33c angeordnet und befestigt. Da kein direkter Kontakt mehr mit der Platine besteht, ist die Pulslichtquelle 22 über Leitungen 28 mit der Platine 20 verbunden.

Bei der dritten Ausführungsform ist das Befestigungsmittel 41 nicht einfach auf der Platinenoberfläche angeordnet bzw. befestigt (wie es bei der ersten und zweiten Ausführungsform der Fall ist), sondern in einer Ausnehmung 20b. Eine entsprechende Ausgestaltung der Befestigung vereinfacht die drehfeste Anordnung des Halteelements bezüglich der Platine 20, da bei Verwendung von zwei Befestigungsmitteln, die in zwei Ausnehmungen angeordnet und befestigt sind, die Ausnehmungen zum Beispiel als einfache Bohrungen oder Sacklöcher ausgestaltet sein können. Der Umfang der Erfindung ist in den beigefügten Ansprüchen festgelegt. Jeder Verweis auf "Ausführungsform(en)", "Beispiel(e)" oder "Aspekt(e) der Erfindung" in dieser Beschreibung, der nicht in den Anwendungsbereich der Ansprüche fällt, ist als anschauliches Beispiel(e) zum Verständnis der Erfindung zu verstehen.

## Patentansprüche

1. Sensoreinrichtung (2) zur optischen Erfassung von Objekten und deren räumlichen Bewegungen, aufweisend
eine 3D-Kamera, die räumliche Daten mit einem Laufzeitverfahren erfasst, wobei die 3D-Kamera eine Platine (20), eine Pulslichtquelle (22), eine Treiberschaltung (23), eine Steuerschaltung (24) sowie einen sensitiven Erfassungschip (25) mit einer lichtsensitiven Fläche (26) umfasst und wobei die Pulslichtquelle (22) und der lichtsensitive Erfassungschip (25) zu einem Erfassungsbereich der 3D-Kamera zusammengefasst sind,
eine der sensitiven Fläche (26) des lichtsensitiven Erfassungschips (25) zugeordnete Empfangsoptik (32a, 32b),
eine der Pulslichtquelle (22) zugeordnete Sendeoptik (31a, 31b),
und ein Halteelement (30) mit einer der Platine (20) zugewandten, den Erfassungsbereich abdeckenden Platinen-Oberfläche (36) und einer gegenüberliegenden Optik-Oberfläche (35), wobei das Halteelement (30) eine Sende-Durchgangsöffnung (33) und eine Empfangs-Durchgangsöffnung (34) aufweist,
wobei die Sende-Durchgangsöffnung (33) eine Sendeoptik-Aufnahme (33a, 33b) und die Empfangs-Durchgangsöffnung (34) eine Empfangsoptik-Aufnahme (34a, 34b) aufweist und
wobei das Halteelement (30) zumindest ein Befestigungsmittel (40, 41) aufweist, und
wobei die Platine (20) zumindest eine nicht-kreisförmige Ausnehmung (20a, 20b) aufweist, in welcher das Befestigungsmittel (40, 41) eingeführt ist, wobei das Befestigungsmittel in diesem Bereich komplementär zur Ausnehmung ausgebildet ist, wobei das Halteelement (30) mit dem zumindest einen Befestigungsmittel (40, 41) drehfest an der Platine (20) festgelegt und ausgerichtet ist, und zwar derart, dass ein vorgegebener Abstand d zwischen der Platinen-Oberfläche (36) des Halteelements (30) und der Platine (20) eingehalten ist und die Empfangs-Durchgangsöffnung (34) an der sensitiven Fläche (26) des lichtsensitiven Erfassungschips (25) ausgerichtet ist.

2. Sensoreinrichtung (1) nach Anspruch 1, **dadurch gekennzeichnet, dass** die Sende-Durchgangsöffnung (33) bei der Platinen-Oberfläche (36) einen von der Platinenoberfläche auskragenden Aufnahmebereich (33c) für die Pulslichtquelle (22) aufweist.

3. Sensoreinrichtung (1) nach Anspruch 2, **dadurch gekennzeichnet, dass** die Pulslichtquelle (22) in dem Aufnahmebereich (33c) bei der Platinen-Oberfläche (36) der Sende-Durchgangsöffnung (33) angeordnet ist.

4. Sensoreinrichtung (1) nach Anspruch 2 oder 3, **dadurch gekennzeichnet, dass** der Aufnahmebereich (33c) aus einem gut wärmeleitfähigen Material besteht oder dieses aufweist.

## Claims

1. Sensor device (2) for optically sensing objects and the spatial movements thereof, having
a 3D camera which captures spatial data with a runtime procedure, wherein the 3D camera comprises a printed circuit board (20), a pulsed light source (22), a driver circuit (23), a control circuit (24) and a sensitive sensing chip (25) with a light-sensitive surface (26), and wherein the pulsed light source (22) and the light-sensitive sensing chip (25) are combined to create a sensing area of the 3D camera,
receiving optics (32a, 32b) assigned to the sensitive surface (26) of the light-sensitive sensing chip (25) transmitting optics (31a, 32b) assigned to the pulsed light source (22),
and a holding element (30) with a printed circuit board surface (36) facing the printed circuit board (20) and covering the sensing area, and an oppositely positioned optics surface (35), wherein the holding element (30) has a transmitting passage opening (33) and a receiving passage opening (34),
wherein the transmitting passage opening (33) has a transmitting optics receptacle (33a, 33b) and the receiving passage opening (34) has a receiving optics receptacle (34a, 34b), and
wherein the holding element (30) has at least one fastening means (40, 41), and
wherein the printed circuit board (20) has at least one non-circular recess (20a, 20b), into which the fastening means (40, 41) is introduced, wherein the fastening means is constructed to match the recess in this region,
wherein the holding element (30) with the at least one fastening means (40, 41) is fixed and aligned in a rotationally fixed manner on the printed circuit board (20), in such manner that a predefined distance d is maintained between printed circuit board surface (36) of the holding element (30) and the printed circuit board (20), and the receiving passage opening (34) is aligned with the sensitive surface (26) of the light-sensitive sensing chip (25).

2. Sensor device (1) according to Claim 1, **characterized in that** the transmitting passage opening (33) has a mounting region (33c) on the surface of the printed circuit board for the pulsed light source (22), which area projects from the printed circuit board surface (36) .

3. Sensor device (1) according to Claim 2, **characterized in that** the pulsed light source (22) is arranged in the mounting region (33c) on the printed circuit board surface (36) of the transmitting passage opening (33).

4. Sensor device (1) according to Claim 2 or 3, **characterized in that** the mounting region (33c) consists of or includes a material having good thermal conductivity.

## Revendications

1. Dispositif de détection (2) pour la détection optique d'objets et des mouvements spatiaux de ceux-ci, comportant :
une caméra tridimensionnelle (3-D), qui saisit les données spatiales avec un procédé de temps de fonctionnement, sachant que la caméra 3-D comprend une platine (20), une source de lumière pulsée (22), un circuit pilote (23), un circuit de commande (24) ainsi qu'une puce de saisie sensible (25) avec une surface photosensible (26) et sachant que la source de lumière pulsée (22) et la puce de saisie photosensible (25) sont réunies dans une zone de saisie de la caméra 3-D, un système optique de réception (32a, 32b) attribué à la surface sensible (26) de la puce de saisie photosensible (25),
un système optique d'émission (31a, 31b) attribué à la source de lumière pulsée (22),
et un élément de support (30) avec une surface de platine (36) couvrant la zone de saisie tournée vers la platine (20) et une surface de système optique (35) opposée, sachant que l'élément de support (30) comporte une ouverture de passage d'émission (33) et une ouverture de passage de réception (34),
sachant que l'ouverture de passage d'émission (33) comporte un logement de système optique d'émission (33a, 33b) et l'ouverture de passage de réception (34) un logement de système optique de réception (34a, 34b) et
sachant que l'élément de support (30) comporte au moins un moyen de fixation (40, 41) et
sachant que la platine (20) comporte au moins un évidement non circulaire (20a, 20b) dans lequel est introduit le moyen de fixation (40, 41), sachant que le moyen de fixation est constitué dans cette zone en complémentarité de l'évidement,
sachant que l'élément de support (30) est fixé solidaire en rotation avec au moins un moyen de fixation (40, 41) à la platine (20) et orienté ainsi de telle manière qu'un intervalle prédéfini d est maintenu entre la surface de platine (36) de l'élément de support (30) et la platine (20) et l'ouverture de passage de réception (34) est orientée sur la surface sensible (26) de la puce de saisie photosensible (25).

2. Dispositif de détection (1) selon la revendication 1, **caractérisé en ce que** l'ouverture de passage d'émission (33) comporte à la surface de platine (36) une zone de logement (33c) débordant de la surface de platine pour la source de lumière pulsée (22).

3. Dispositif de détection (1) selon la revendication 2, **caractérisé en ce que** la source de lumière pulsée (22) est disposée dans la zone de logement (33c) à la surface de platine (36) de l'ouverture de passage d'émission (33) .

4. Dispositif de détection (1) selon la revendication 2 ou 3, **caractérisé en ce que** la zone de réception (33c) est composée d'un matériau bon thermo-conducteur ou comporte celui-ci.
